# EUROPEAN PATENT SPECIFICATION

(11) **EP 1 562 382 B1**
(45) Date of publication and mention of the grant of the patent: **04.09.2019**
(21) Application number: 05001465.3
(22) Date of filing: 25.01.2005
(51) Int. Cl.: G11B 27/034, H04N 5/765, H04N 21/236, H04N 21/434, H04N 21/4402, H04N 19/40

(54) **FORMAT CONVERSION DEVICE AND FORMAT CONVERSION METHOD**
FORMATKONVERTIERUNGSVORRICHTUNG UND FORMATKONVERTIERUNGSVERFAHREN
DISPOSITIF DE CONVERSION DE FORMAT ET PROCÉDÉ DE CONVERSION DE FORMAT

(30) Priority: 26.01.2004 JP 2004016812
(43) Date of publication of application: 10.08.2005
(73) Proprietor: Socionext Inc., Kohoku-ku Yokohama-shi Kanagawa 222-0033 (JP)
(72) Inventor: OKADA, Masahiro, Takatsuki-shi Osaka 569-1022 (JP); TANIKAWA, Yuji, Hirakata-shi Osaka 573-0065 (JP)
(74) Representative: Gill Jennings & Every LLP

(56) References cited:
- EP-A2- 0 833 514
- EP-A2- 0 949 820
- WO-A1-01/50761
- GB-A- 2 351 888

## Description

### BACKGROUND OF THE INVENTION

### 1. FIELD OF THE INVENTION

The present invention relates to a format conversion method for compression-encoded multimedia information.

### 2. DESCRIPTION OF THE RELATED ART

In general, examples of a compression-encoding technology for multimedia information called MPEG2 (Moving Picture Exports Group Phase 2) include PS (Program Stream) format used for package media such as DVD (Digital Versatile Disc) and TS (Transport Stream) format used for a broadcast wave of, for example, digital broadcasting or the like.

In conventional AV apparatuses, such as a DVD recorder and HDD (HardDisk Drive) recorder, one of the foregoing formats, which are the MPEG2-program stream (hereinafter, referred to as "MPEG2-PS") and the MPEG2-transport stream (hereinafter, referred to as "MPEG2-TS), is selectively used.

As a background technology of the foregoing technology can be mentioned a technology related to the conversions in MPEG2-PS video format and MPEG2-PS video recording format is available (for example, see No. 2003-242721 of the Unexamined Japanese Patent Applications).

It is forecasted that there will be an increasing demand for recording, reproducing, dubbing, or the like, of data between the different formats in the foregoing AV apparatuses in the arrival of an environment where data of the package-based MPEG2-PS format and data of the broadcast-based TS format are mixedly used in response to the commencement of the ground digital broadcasting.

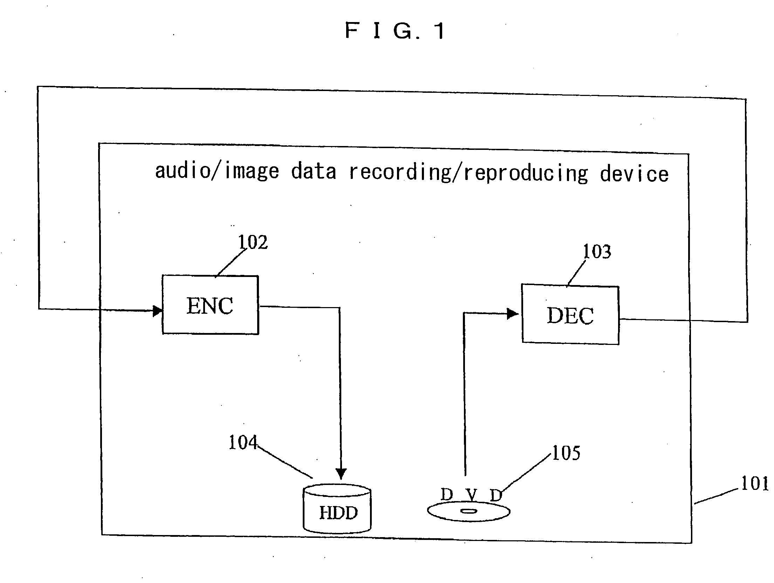

Below is contemplated a case of executing an existing format conversion method using a conventional audio/image data recording/reproducing device 101. The description is based on the assumption that data of the MPGE2-PS (for example, DVD-video Recording Format) memorized in a DVD media 105 is format-converted into the MPEG2-TS format to be thereafter dubbed, wherein there is a problem that a bit length of the data constituting respective unit data is different in the case of the MPEG2-PS and in the case of the MPEG2-TS. Therefore as a possible constitution of the format conversion, as shown in Fig. 1, the data is once decoded in a decoder 103 and outputted (reproduced) to be thereby converted back into a base band signal, and the base band signal is inputting to an encoder 102 and format-converted into data of the MPEG2-TS in the encoder 102 to be thereafter recorded on a hard disk 104 (re-encoding).

However, according to the foregoing constitution, the data of the MPEG2-PS format is necessarily reproduced once and then processed in real time as the data of MPEG2-TS format, which requires a large amount of processing time. Further, an image quality is degraded because a bit rate is lowered (downconverted). The foregoing problems also occur when the data of the MPEG2-TS format is format-converted into the data of the MPEG2-PS format.

Therefore, a main object of the present invention is to execute the format conversions at a high speed between the MPEG2-PS format is format-converted into the data of the MPEG2-PS format.

Therefore, a main object of the present invention is to execute the format conversions at a high speed between the MPEG2-PS format and the MPEG2-TS format when data is dubbed or the like.

European patent application EP 0833514 A2 describes a technique for converting data in the MPEG2-PS format to the MPEG2-TS format.
EP0949820 discloses data stream converting apparatus.
WO01/50761 discloses method and apparatus for converting data streams.

### SUMMARY OF THE INVENTION

According to the present invention, there is provided a format conversion method for converting a stream in a first format and including audio information, image information or management information into a stream in a second format, wherein the streams in the first and the second formats are respectively comprised of a plurality of unit data, and a first fixed length of data units of the first format is longer than a second fixed length of data units of the second format, the plurality of unit data in the first format is converted without having to be re-encoded into the plurality of unit data in the second format, and the stream in the first format has first reference value (SCR) in the header of each of the plurality of unit data wherein, the first reference value is for setting or correcting a value of reference synchronizing information (STC) serving as a time reference to a value contemplated on an encoder, wherein the format conversion method includes: calculating a data length required in a first one of the plurality of unit data among the stream in the first format by comparing first reference values corresponding to a first one of the plurality of unit data and a next one of the plurality of unit data respectively, among the stream in the first format, the first one is a reference value of a pack used for storing the management information and the next one is a reference value of a pack used for storing the image information; appending unnecessary data to a first unit data including the management information in the second format to make the reference value of a second unit data in the second format correspond to the reference value of the pack used for storing the image information in the first format, wherein the unnecessary data is stuffed so that the data length of the first unit data including the management information in the second format and the calculated data length have a uniform length; and for a respective unit data of the first format used for storing image information or audio information: extracting a picture size of the payload portion of the respective unit data including the image information or the audio information; calculating a number of data dividable relative to a data size of the unit data of the second format; dividing data including the image information or the audio information in the respective unit data of the first format based on the number of data so as to allocate the divided data to units data of the second format.

Hence, in the present invention, in order to deal with such a case that unit data encoded by means of a first format has a longer byte length
than that of a second format, the unit data of the first format is divided to be thereby allocated to the unit data of the second format. Further, byte lengths of unit data in a leading position of a stream encoded by means of the first format and a unit comprised of a plurality of unit data in a stream encoded by means of the second format are made to correspond to each other, and respective reference values for adjusting reference time in decoding the respective unit data by means of the first and second formats are also made to correspond to each other. In the foregoing manner, the unit data of the first format can be converted into the unit data of the second format demanding no conversion of the encoding format of the first format.

According to the present invention, the conversion from the first format to the second format does not require such a process that a first stream encoded by means of the first format is first decoded in the decoder and reproduced to be thereafter re-encoded in the encoder for the format conversion from the first format to the second format. To replace the foregoing method, in the constitution according to the present invention, the reference value for adjusting the reference time in decoding the respective unit data in the first format can be converted into the reference value for adjusting the reference time in decoding the respective unit data in the second format.

Further, according to an embodiment of the present invention, each of the unit data constituting the unit in the stream of the second format has input time information. Thereby, when the conversion from the first format to the second format is executed according to the present invention, the input time information of each unit data is created for each predetermined byte length based on the reference value in the second format.

Therefore, according to an embodiment of the present invention, when there is no time information in the respective unit data in the first format, which corresponds to the input time information of each unit data in the second format, the input time information of the second format can be created without the re-encoding process from the first format.

Further, according to an embodiment of the present invention, the first stream encoded by means of the first format has the time information for synchronously reproducing image information and audio information. Therefore, the time information included in the stream of the first format can be used as the time information included in the stream of the second format in the case of the conversion of the first stream into a second stream of the second format.

According to an embodiment of the present invention, therefore, the conversion from the first format to the second format does not require such a process that the first stream encoded by means of the first format is first decoded in the decoder and reproduced to be thereafter re-encoded in the encoder for the format conversion from the first format to the second format. To replace the foregoing method, the time information for synchronously reproducing the image information and the audio information can be set according to the present invention.

Further, according to an embodiment of the present invention, the first stream encoded by means of the first format has the time information for decoding the image information and the audio information. Therefore, the time information included in the stream of the first format is used as the time information included in the stream of the second format in the case of the conversion of the first stream into the second stream of the second format.

According to an embodiment of the present invention, therefore, the conversion from the first format to the second format does not require such a process that the first stream encoded by means of the first format is first decoded in the decoder and reproduced to be thereafter re-encoded in the encoder for the format conversion from the first format to the second format.

### BRIEF DESCRIPTION OF THE DRAWINGS

Fig. 1 is a schematic view of a dubbing operation according to a conventional example.
Fig. 2 is an illustration of a multiplexing data structure multiplexing data of MPEG2-PS format.
Fig. 3 is an illustration of a multiplexing data structure of MPEG2-TS format.
Fig. 4 is a block diagram illustrating a constitution of a format conversion device.
Fig. 5 is a flow chart of a format conversion method.
Fig. 6 is a flow chart of a data reading/separating step .
Fig. 7 is a flow chart of a data analyzing step.
Fig. 8 is a flow chart of the header information analyzing step.
Fig. 9 is a flow chart of a format conversion necessary information creating step.
Fig. 10 is a layout illustration of a reference value for adjusting reference time in decoding data.
Fig. 11 is an illustration of a format conversion of payload portions.
Fig. 12 is a flow chart of a step of creating time information required for synchronously reproducing image information and audio information.
Fig. 13 is a flow chart of a management information creating step.
Fig. 14 is a flow chart of a second-format data creating step.
Fig. 15 is a flow chart of a data writing step.
Fig. 16 is a block diagram illustrating a constitution of a format conversion device.
Fig. 17 is a flow chart of a format conversion method.
Fig. 18 is a flow chart of a data reading/separating step.
Fig. 19 is a flow chart of a data analyzing step.
Fig.20 is a flow chart of the header information analyzing step.
Fig. 21 is a flow chart of a format conversion necessary information creating step.
Fig. 22 is a layout illustration of a reference value for adjusting reference time in decoding data.
Fig. 23 is an illustration of a format conversion of payload portions.
Fig. 24 is a flow chart of a step of creating time information required for synchronously reproducing image information and audio information.
Fig. 25 is a flow chart of a management information creating step.
Fig. 26 is a flow chart of a second-format data creating step.
Fig. 27 is a flow chart of a data writing step.
Fig. 28 is a block diagram illustrating a format conversion device in which a pipeline process is utilized.
Figs. 29A - 29D show the pipeline process.

### DETAILED DESCRIPTION OF THE PREFERRED EMBODIMENTS

Hereinafter, preferred embodiments of the present invention and examples useful for understanding the invention are described referring to the drawings.

### CONSTITUTION OF MPEG2-PS

First, a constitution of the MPEG2-PSis described.

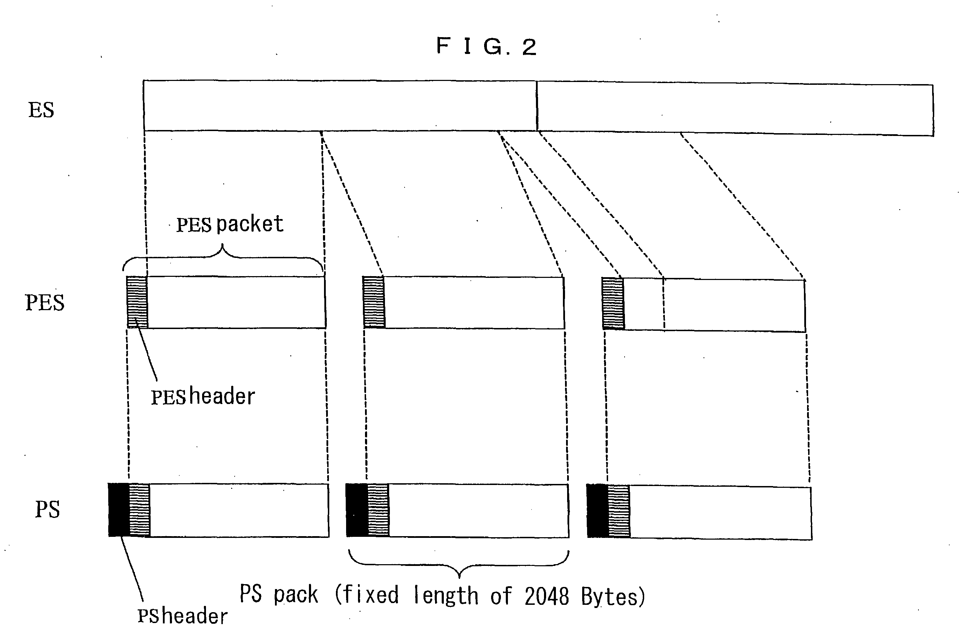

Fig. 2 shows a data structure of the MPEG2-PS format, which is an example of a first format according to the present invention.
The format is designed to comprise a program in a stream. It is assumed that a program stream is applied to data transfer and data storage in an environment where no error is possibly generated, and for example, adopted to DVD or the like.

A constitution of the program stream is described in a simplifiedmanner. Respective packs constituting the MPEG2-PS are set as follows. ES (Elementary Stream) is divided into PES packets of a fixed length, and a PS header is appended to the respective PES packets. Each PS pack (unit data) is set to have a fixed length of 2048 bytes (2 kbytes).

In a PES header included in each PES packet, a code for discriminating an individual stream, packet size, PTS (Presentation Time Stamp) for synchronously reproducing image and audio, time information such as DTS (Decoding Time Stamp) which is time information showing a point of time when image information decoded from a buffer in a decoder for decoding the stream is outputted, and the like, are described. The PTS and the DTS shows a same value when the PES packet is audio information, in which case only the PTS is recorded.

In the PS header appended to each PS pack, SCR (System Clock Reference) is recorded. The SCR serves as a reference value for setting or correcting a value of STC (reference synchronizing information) serving as a time reference to a value contemplated on an encoder side in an MPEG system decoder including a decoder for image and audio information. It is required that the SCR be included in the PS at least once every 0.7 msec.

### CONSTITUTION OF MPEG2-TS

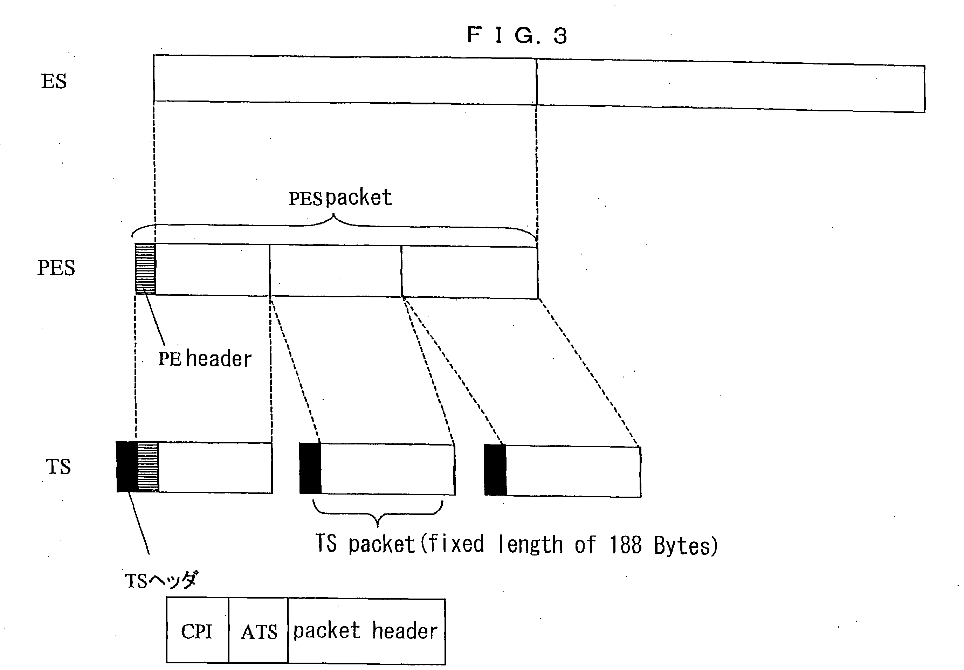

Fig. 3 shows a data structure of the MPEG2-TS format, which is an example of a second format according to the present invention. The MPEG2-TS format is capable of comprising a plurality of programs in a stream and, therefore, responding to a broadcast or the like. Because of the characteristic, it is assumed that the foregoing format is applied to an environment where an error can be generated in data transmission, examples of which are broadcast, communication network and the like.

A constitution of the stream in the MPEG2-TS is described in a simplified manner. ES is divided into PES packets, and the PES packets are further divided into packets of a fixed length of 188 bytes with regard to a possible application to the environment where the erroneous data transmission is generated. Further, a TS header is appended to the respective packets to thereby constitute the TS packet (unit data).

As recited in the description of the MPEG2-PS format, a code for discriminating an individual stream, packet size, PTS (Presentation Time Stamp) for synchronously reproducing image and audio, time information such as DTS (Decoding Time Stamp) which is time information showing a point of time when image information decoded from a buffer in a decoder for decoding the stream is outputted, and the like, are described in the PES header included in each PES packet in the MPEG2-TS format as well.

The TS packet is comprised of the TS header, PES header, adaptation field (adaptation_field) and payload (payload portion).

The TS header appended to each TS packet is comprised of CPI (Copy Permission Indicator) representing copyright information, ATS (Arrival Time Stamp) and a packet header.

The adaptation field (adaptation_field) includes information such as PCR (Program Clock Reference) and, further, a stuffing feature executed in the TS packet so that the TS packet has the fixed length of 188 bytes . In the same manner as the SCR, the PCR serves as a reference value for setting or correcting a value of STC (reference synchronization information) serving as a time reference to a value contemplated on an encoder side in an MPEG system decoder including a decoder for image and audio information. In the MPEG2-TS, a cycle of transmitting the PCR is set to, in general, at most 0.1 msec in order to stabilize an operation.

Next, the device constituted according to the present embodiment and the format conversions relating to the MPEG2-PS and MPEG2-TS using the device constituted according to the present embodiment are described.

The description hereinafter is premised on the followings:
- DVD-VR (Video Recording), which is an example of the MPEG2-PS format, is the first format.
- The MPEG2-TS format is the second format.
- A unit comprised of 11 TS packets of the MPEG2-TS corresponds to a pack of the MPEG2-PS.

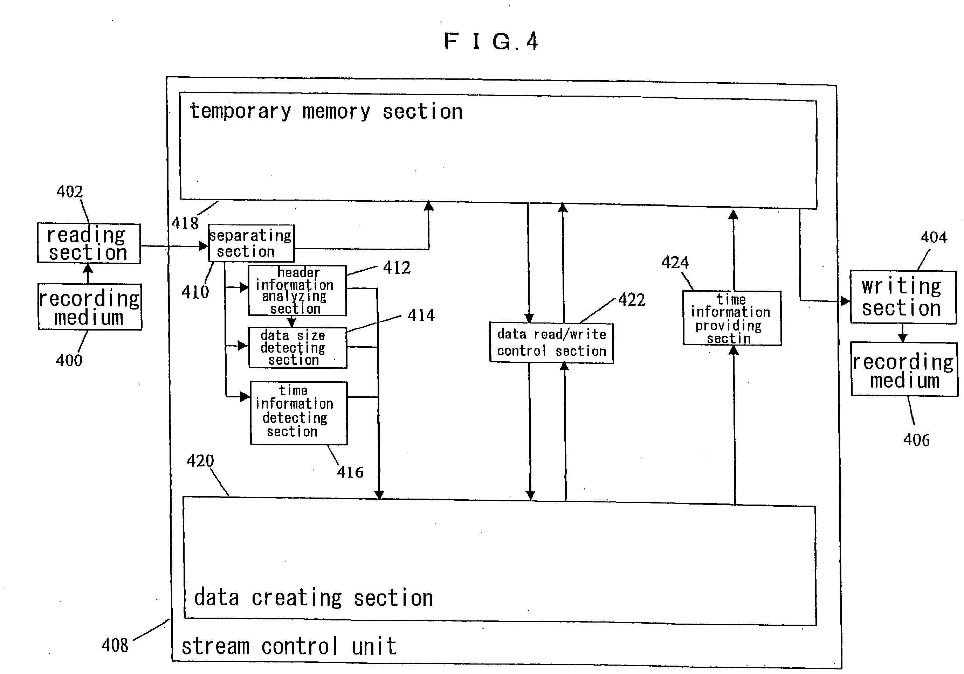

Next, the format conversion device according to the present embodiment is described. The format conversion device according to the present embodiment, as shown in Fig. 4, comprises a recording medium 400 (for example, DVD-RAM) in which data is memorized by means of the MPEG2-PS format, a reading section 402 (for example, RAM drive) for reading the data from the recording medium 400, a writing section 404 for writing data by means of the MPEG2-TS format, a recording medium 406 different to the recording medium 400 and a stream control unit 408.

The stream control unit 408 comprises a separating section 410 for separating the data of the MPEG2-PS format read by the reading section 402, a header information analyzing section 412 for analyzing header information of the data separated by the separating section 410, a data size detecting section 414 for detecting a predetermined data size from the data separated by the separating section 410, a time information detecting section 416 for detecting predetermined time information from the data separated by the separating section 410, a temporary memory section 418 for temporarily memorizing predetermined data, a data creating section 420 comprising, for example, a microprocessor, a data read/write control section 422 for controlling exchange of data between the temporarily memory section 418 and the data creating section 420, and a time information providing section 424 for providing predetermined time information.

Next, the format conversions between the MPEG2-PS and the MPEG2-TS using the format conversion device according to the present embodiment are described. First, a process of converting multiplexing data of the MPEG2-PS format into data of the MPEG2-TS format is described.

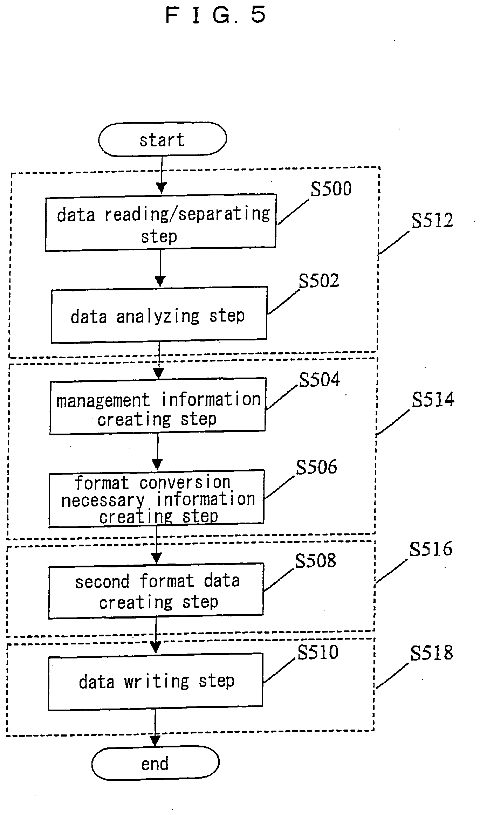

Fig. 5 shows a process flow in converting the multiplexing data of the MPEG2-PS format into the data of the MPEG2-TS format.

The process flow comprises a data reading/separating step S500 for reading and separating the multiplexing data of the MPEG2-PS format, a data analyzing step S502 for analyzing the data separated in the step S500, a management information creating step S504 for creating management information in order for the management of the stream of the MPEG2-TS format, a format conversion necessary information creating step S506 for creating information required for the format-conversion of the time information or the like, a second-format data creating step S508 for creating the data of the MPEG2-TS format from the information created in the step S506, and a data writing step S510 for writing the data of the MPEG2-TS format created in the step S508 on the recording medium 406.

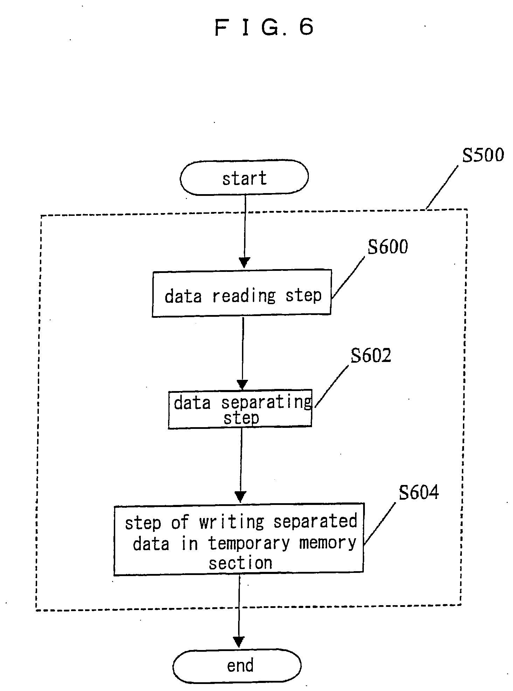

Hereinafter, the respective steps are described in detail referring to Figs. 6 through 15. Fig. 6 is a flow chart showing the details of the data reading/separating step S500. The data reading/separating step S500 includes a data reading step S600, a data separating step S602 and a writing step S604. In the data reading step S600 , the data recorded on the recording medium 400 by means of the MPEG2-PS format is read by the reading section 402. In the data separating step S602, the data recorded by means of the MPEG2-PS format is separated into audio information AES (Audio ES), image information VES (Video ES) and management information (RDI pack) by the separating section 410 in the stream control unit 408. In the writing step S604 , the separated data is written in the temporary memory section 418.

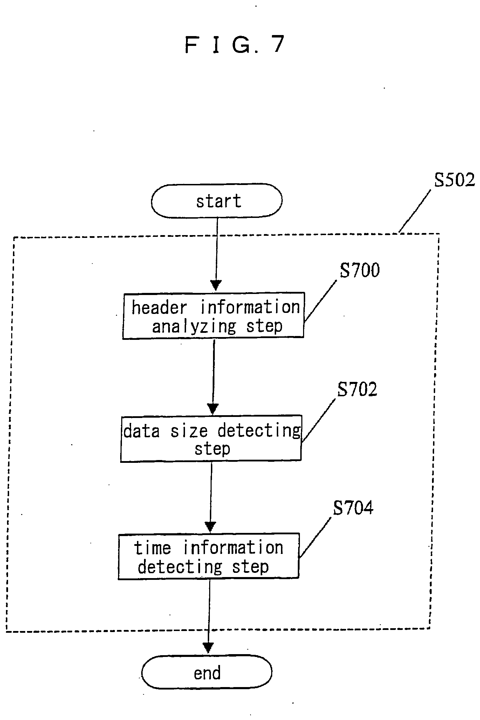

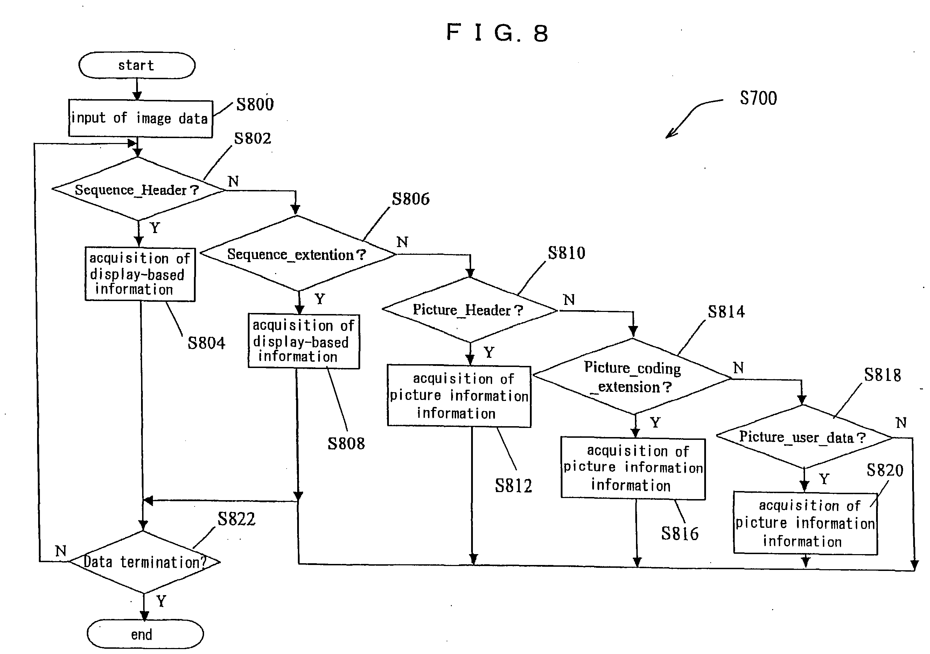

Figs. 7 and 8 each is a flow showing the details of the data analyzing step S502. In the data analyzing step S502, a predetermined analyzing result is outputted from the data separated in the data reading/separating step S500 through a header information analyzing step S700, a data size detecting step S702 and a time information detecting step S704.

In the header information analyzing step S700, as shown in Fig. 8, a sequence header and a picture header are analyzed by the header information analyzing section 412 (S802, S806, S810, S814 and S818) between an input of the image information (VES) separated in the data reading/separating step S500 (S800) and data termination (S822).

As a result of the analyses, "horizontal_size_value, vertical_size_value, aspect_ratio_information, horizontal_size_extention, vertical_size_extention, temporal_reference, Picture_cording_type, Picture_structure, and Picture_user_data" can be obtained (S804, S808, S812, S816 and S820).

In the data size detecting step S702, a picture size is calculated from the image information whose header information is analyzed in the header information analyzing step S700 subsequent to the separation in the data reading/separating step S500. The picture size denotes the data size of the image included in the PS pack of the MPEG2-PS and calculated by means of a counter. The pack header, packet header and PES header included in the PS pack are removed in the calculation.

In the time information detecting step S704, an initial PTS is detected by the time information detecting section 416 in the separated image information (VES) and the audio information (AES).

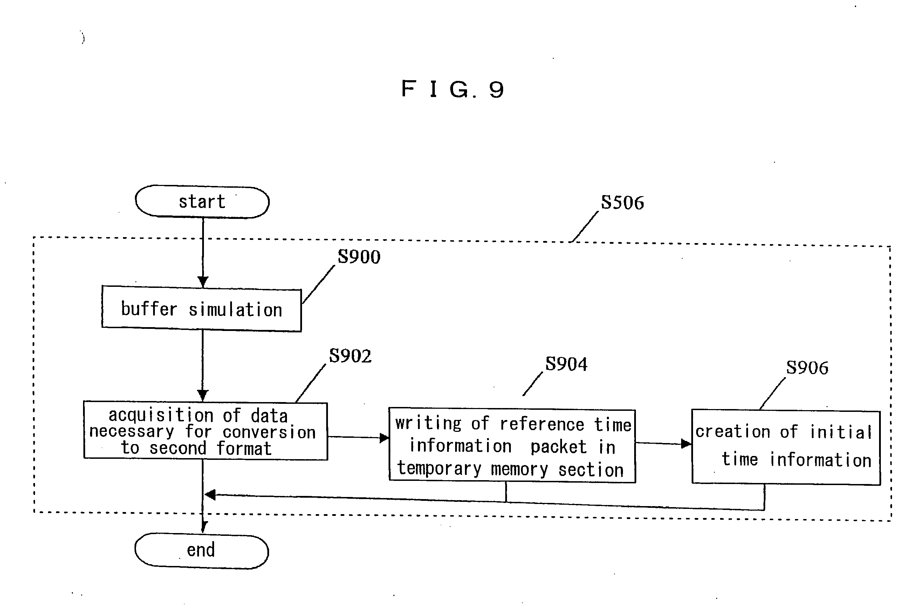

Next, the format conversion necessary information creating step S506 is described in detail prior to the description of the management information creating step S504. Fig. 9 shows the details of the format conversion necessary information creating step S506. The step S506 includes a buffer simulation step S900, a data acquiring step S902, a writing step S904 and an initial time information creating step S906.

The buffer simulation step S900 is carried out in the data creating section 420 based on the analyzing result obtained in the data analyzing step S502. In the data acquiring step S902, information necessary for the conversion to the second format is acquired from the information obtained in the buffer simulation step S900. In the writing step S904, the information acquired in the data acquiring step S902 is written in the temporary memory section 418. In the initial time information creating step S906, initial time information is created from the information written in the temporary memory section 418.

The details of the buffer simulation step S900 are described. In the buffer simulation step S900, the SCR, picture size, PTS and DTS are read from the data of the MPEG2-PS to be converted in the data reading/separating step S500. Then, the buffer simulation is executed to these read information so that the PCR, multiplexing order, payload size/pointer and packet number are created.

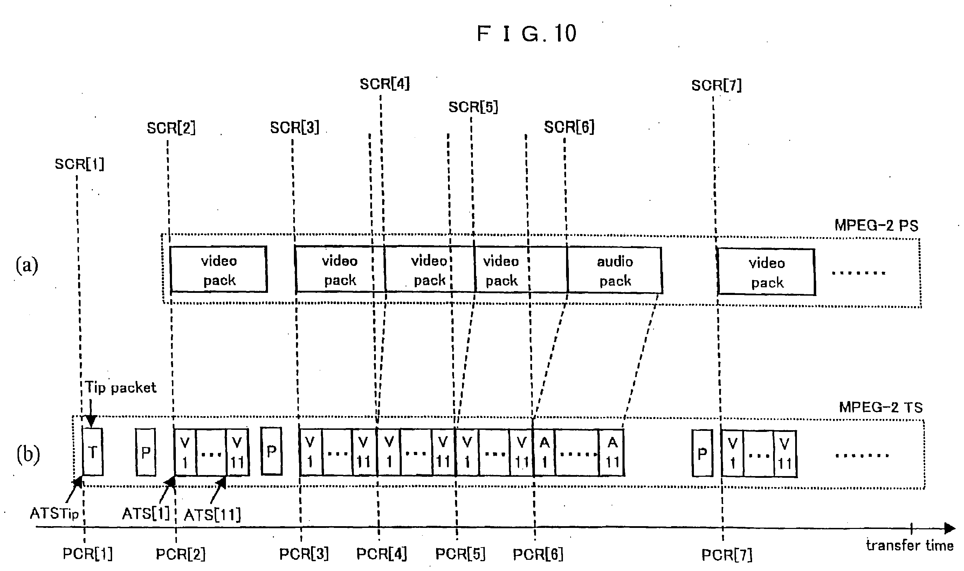

Next, a step of outputting the PCR (Program Clock Reference) recorded on the data of the MPEG2-TS based on the SCR recorded on the data of the MPEG2-PS is described referring to Fig. 10.

A reference symbol (a) in Fig. 10 shows the stream of the MPEG2-PS, while a reference symbol (b) shows the stream of the MPEG2-TS. In the MPEG2-PS, a pack for storing the management information (not shown) is provided as a first (leading) pack, a pack for storing the image information is provided as a second pack subsequent to the first pack, packs for storing the image information in the same manner as in the second pack are provided as third through fifth packs subsequent to the second pack, and a pack for storing the audio information is provided as a sixth pack subsequent to the fifth pack.

In the MPEG2-TS, in a manner corresponding to the arrangement of the packs of the MPEG2-PS, a plurality of packets for storing the management information is provided as a first (leading) unit, a plurality of packets for storing the image information is provided as a second unit subsequent the first unit, units for storing the image information in the same manner as in the second unit are provided as third through fifth units subsequent to the second unit, and a plurality of packets for storing the audio information is provided as a sixth unit subsequent to the fifth unit.

First, a step of converting the SCR of the MPEG2-PS into the PCR of the MPEG2-TS is described. As described earlier, the SCR is stored in the header appended to each pack of the MPEG2-PS, and the SCR of the MPEG2-PS is read by the reading section 402. Next, the SCR appended to the second pack and the SCR appended to the first pack for storing the management information are compared to each other so as to extract a data length required for the first pack. Next, unnecessary data is appended to the unit of the MPEG2-TS including the management information in order to make the PCR of the second unit of the MPEG2-TS correspond to the SCR of the second pack of the MPEG2-PS. Thereby, the unnecessary data (stuffing data) is stuffed so that the data length of the MPEG2-PS and the data length of the MPEG2-TS can have a uniform length.

Through the foregoing process, the SCR of the MPEG2-PS format and the PCR of the MPEG2-TS format can be surely synchronized with each other, and the SCR of the MPEG2-PS can be successfully converted into the PCR of the MPEG2-TS without the re-encoding process.

Next, a step of creating the ATS of the MPEG2-TS is described. As shown in Fig. 10, the ATS is provided per predetermined byte length in the respective unit data. Taking advantage of the fact, the ATS of a first packet is created based on the PCR described earlier, and a second packet and packets thereafter are respectively provided with the ATS at predetermined time intervals subsequent to the ATS of the first packet, which is the process of creating the ATS. As an alternative constitution, the ATS of the second packet may be obtained from the ATS of the first packet, and the ATS of the third packet may be obtained from the ATS of the second packet.

In the foregoing manner, the ATS of the MPEG2-TS can be created without being re-encoded from the MPEG2-PS format when the data of the MPEG2-PS has no time information corresponding to the ATS of each MPEG2-TS packet.

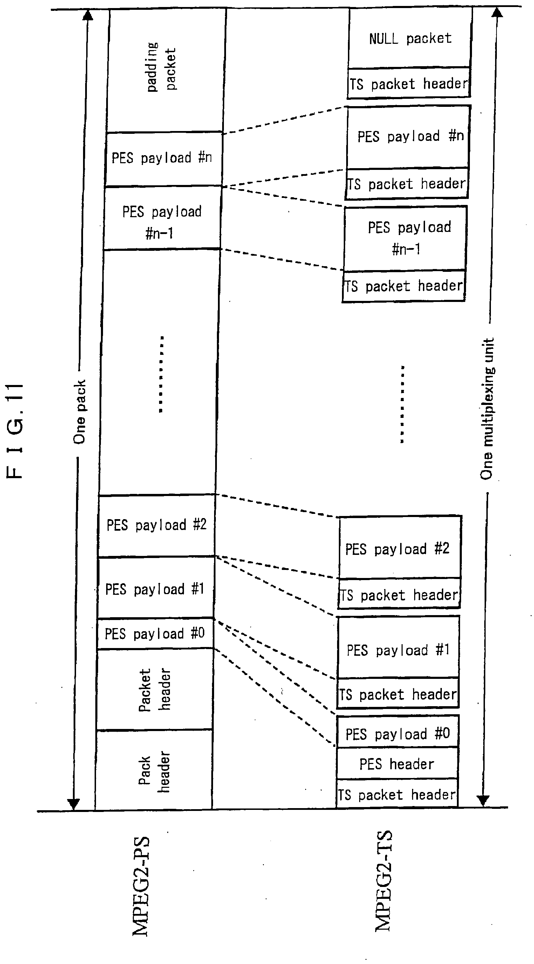

Next, the conversion of the image information and the audio information is described referring to Fig. 11. As described, each pack of the MPEG2-PS includes the pack header of the PS pack and the PES payloads. Among the components constituting the pack, a picture size of the PES payloadportions including the image information and the audio information, except for the pack header, is extracted, and number of data dividable relative to the MPEG2-TS is calculated. Based on the calculated number of data, the image information and the audio information are allocated to the payload portions of the respective packets of the MPEG2-TS to be stored therein. In the foregoing manner, the respective image information and audio information of the MPEG2-PS can be converted into the respective image information and audio information of the MPEG2-TS without the re-encoding process.

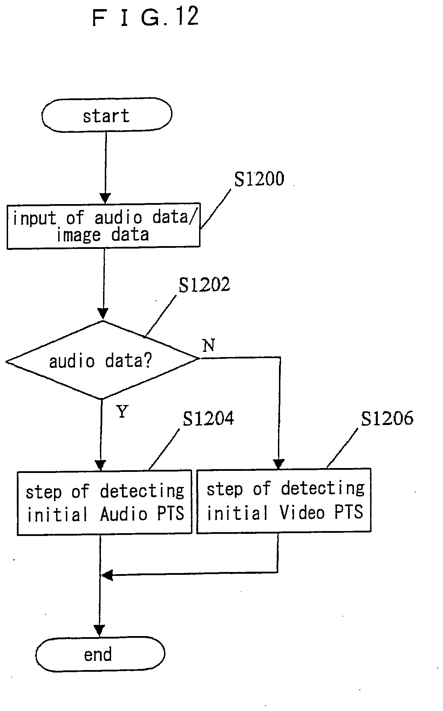

Next, a step of creating the PTS or the DTS of the MPEG2-TS is described referring to Fig. 12. As described earlier, the PTS or the DTS of the MPEG2-TS is stored in the packet header of the PES packet. Because a PES packet constitutes a PS pack in the MPEG2-PS, the PTS or the DTS is stored for each PS pack. A process of detecting the PTS, for example, which is shown in Fig. 12, is described below. When the audio data or the image data is inputted (S1200), if the data is the image data or the audio data is judged (S1202), an Audio PTS is detected when the judgment result is the audio data (S1204), and a Video PTS is detected when the judgment result is the image data (S1206).

In the case of the MPEG2-TS, because a PES packet is divided into 11 TS packets , the PTS or the DTS is, for example, appended to one of the 11 TS packets.

In the MPEG2-PS, the PES packet, to which the PES header including the PTS or the DTS is appended, constitute a PS pack. In contrast to that, in the case of the MPEG2-TS, the PES header is appended to the PES packet, and the PES packet is divided. Therefore, the PTS or the DTS is disposed in the PES header of each PS pack in the MPEG2-PS, while the PTS or the DTS is disposed in the PES header appended to one of the plurality of TS packets in the MPEG2-TS. Therefore, there is apossibility that the PTS or the DTS in the MPEG2-PS and the PTS or the DTS in the MPEG2-TS correspond to each other.

When the PTSs or the DTSs correspond to each other, it is unnecessary to convert the PTS or the DTS in the format conversion, and the PTS or the DTS prior to the format conversion can be used in the same manner after the format conversion. This further facilitates the conversion of the PTS or the DTS .

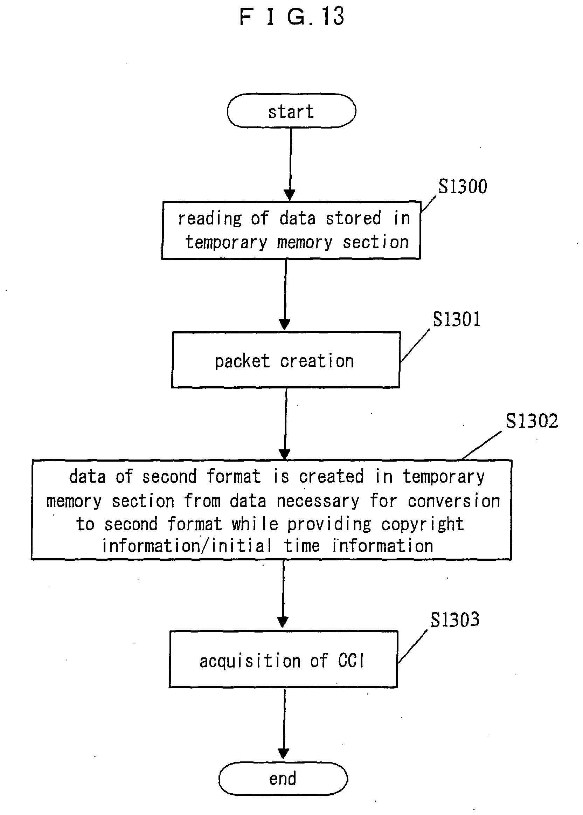

Returning to the management information creating step S504, Fig. 13 shows a flow of the management information creating step S504. The management information creating step S504 includes a step S1300 in which the RDI pack, which is the management data separated in the data reading/separating step S500 and stored in the temporary memory section 418, is read by means of the data read/write control section 422, a step S1301 in which an TIP packet and a PMT (Program Map Table) packet are created based on the information of the RDI pack in the data creating section 420, a step S1302 in which the TIP packet and the PMT packet are written in the temporary memory section 418 by means of the data read/write control section 422 and a step S1303 in which CCI as copyright information is acquired from the PMT packet.

Through the foregoing steps, the PCR, multiplexing order, payload size/pointer, packet number and packet structure in the MPEG2-TS format are determined so that PES_Header (Adaptation_Field) can be created.

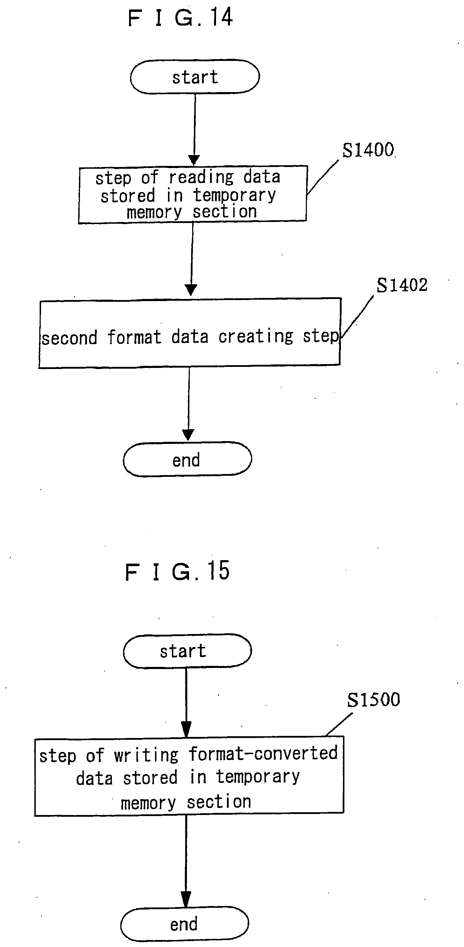

Next, the second format data creating step S508 is described. Fig. 14 is a process flow of the second format data creating step S508. The step S508 includes a reading step S1400 and a data creating step S1402.

In the reading step S1400, different types of packet data, which are PMT, TIP, PCR, AES, VES, ATS, PAT, SIT and padding, written in the temporary memory section 418 in the foregoing step is read by means of the data read/write control section 422.

In the data creating step S1402 , the packet of the MPEG2-TS format is created on a buffer memory based on the data read in the reading step S1400 and information such as the multiplexing order, payload size/pointer and packet number obtained in the format conversion necessary information creating step S506.

In the second format data creating step S508, the CCI and PES_Header obtained in the format conversion necessary information creating step S506 is provided for the packet of the MPEG2-TS format when the data of the MPEG2-TS format is created in the temporary memory section 418. At that time, the ATS is provided for the foregoing CCI and PES_Header at constant intervals by the time information providing section 424.

Next, the data writing step S510 is described. Fig. 15 is a flow chart of the data writing step S510. In the data writing step S510, the data of the MPEG2-TS format created in the temporary memory section 418 is recorded on a HDD 406. (S1500).

In the same manner as described, the format conversion is executed to the packs thereafter regarding 11 TS packets as a unit.

Through the foregoing steps, the format conversion can be executed at a high speed requiring no re-encoding process in the case of the format conversion from the MPEG2-PS format to the MPEG2-TS format.

### FORMAT CONVERSION FROM MPEG2-TS TO MPEG2-PS

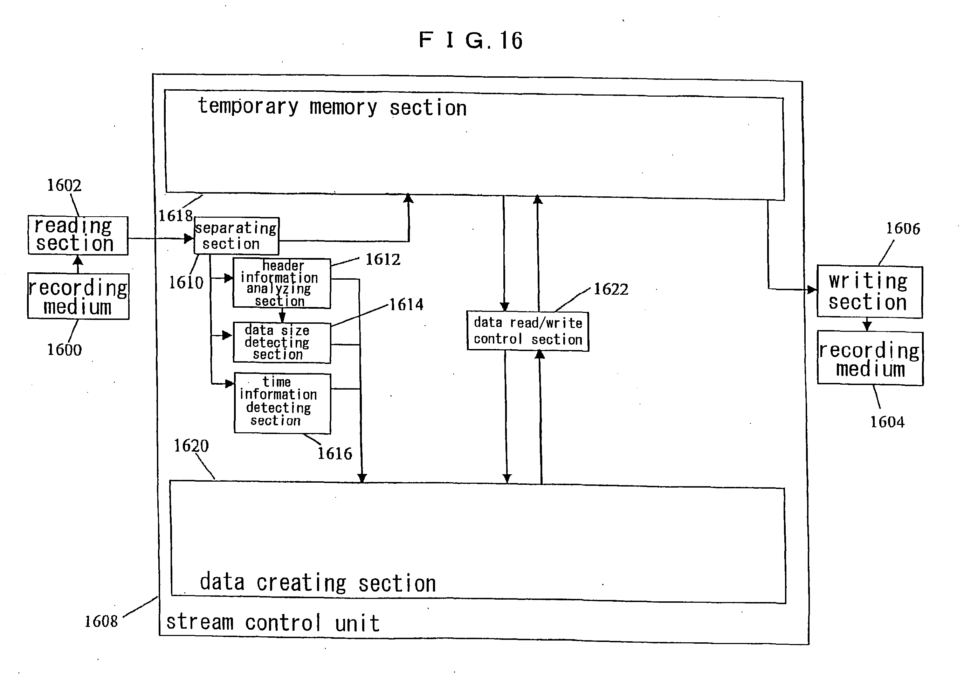

Next, the format conversion from the MPEG2-TS to the MPEG2-PS is described. Fig. 16 is a block diagram illustrating a constitution of a format conversion according to the present invention. In the description below, the MPEG2-TS format is the first format, and the MPEG2-PS format is the second format.

The format conversion device, as shown in Fig. 16, comprises a recording medium 1600 for storing data multiplexed by means of the MPEG2-TS format, a reading section 1602 for reading the data from the recording medium 1600, a writing section 1606 for writing the format-converted data on a recording medium 1604 which is different to the recording medium 1600 and a stream control unit 1608 for format-converting the data read by the reading section 1602.

The stream control unit 1608 comprises a separating section 1610 for separating the data read by the reading section 1602 into audio information, image information and management information, a header information analyzing section 1612 for analyzing header information from the image information of the MPET2-TS separated by the separating section 1610, a data size detecting section 1614 for detecting a predetermined data size from the image information of the MPEG2-TS separated by the separating section 1610, a time information detecting section 1616 for detecting predetermined time information from the data of the MPEG2-TS separated by the separating section 1610, a temporary memory section 1618 for storing predetermined information, a data creating section 1620 comprising, for example, amicroprocessor, and a data read/write control section 1622 for controlling exchange of the data memorized in the temporary memory section 1618.

Based on the foregoing constitution, a process of format-converting the data multiplexed by means of the MPEG2-TS format into the data of the MPEG2-PS format.

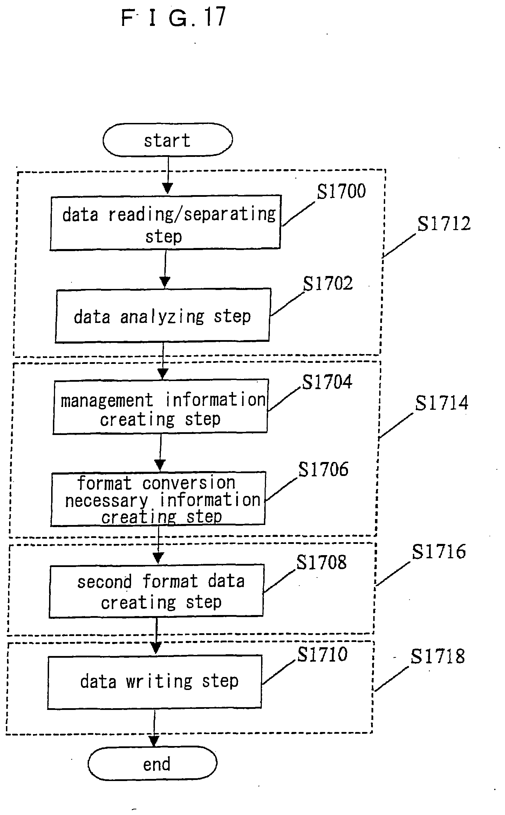

Fig. 17 is a flow chart of the format conversion. The format conversion process includes a data reading/separating step S1700, a data analyzing step S1702, a management information creating step S1704, a format conversion necessary information creating step S1706, a second format data creating step S1708 and a data writing step S1710, which are executed to realize the format conversion of the data multiplexed by means of the MPEG2-TS format into the data of the MPEG2-PS format.

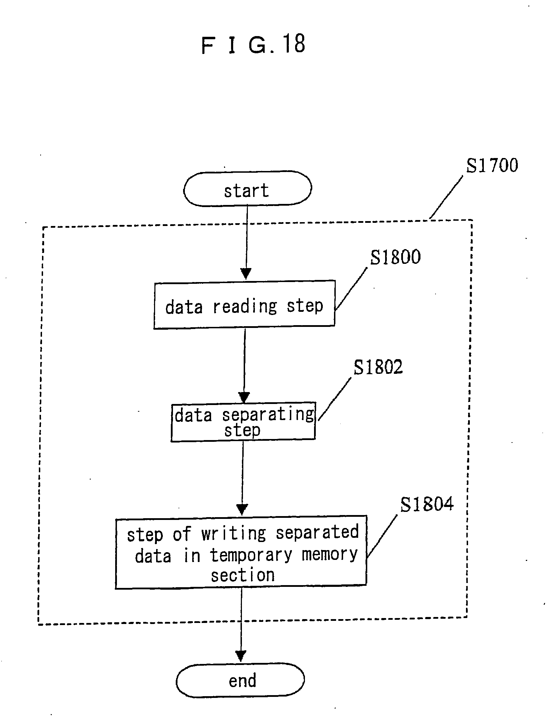

Hereinafter, the respective steps are described referring to Figs. 18 through 27.

Fig. 18 is a flow chart of the data reading/separating step S1700. First, the data of the MPEG2-TS format is read (S1800). The read data of the MPEG2-TS format is separated into audio information AES (Audio ES), image information VES (Video ES), a TIP packet and a PMT (Program Map Table) packet which are the management information (S1802) . The separated AES, VES, TIP packet and PMT packet are stored in the temporary memory section 1618 remaining the current state (S1804).

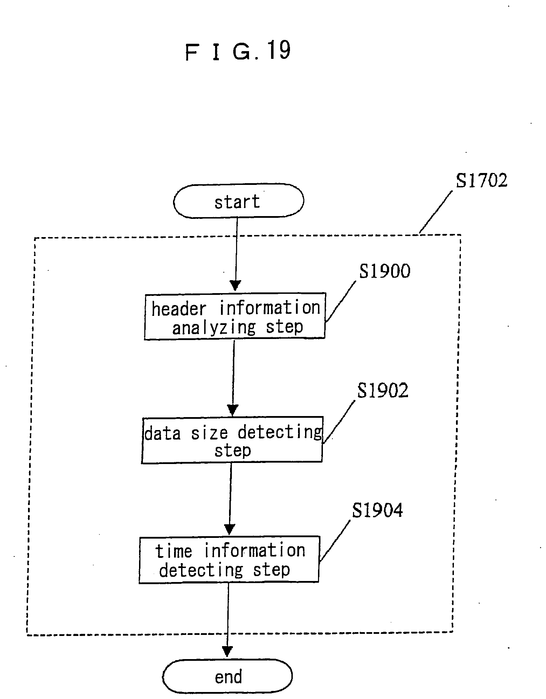

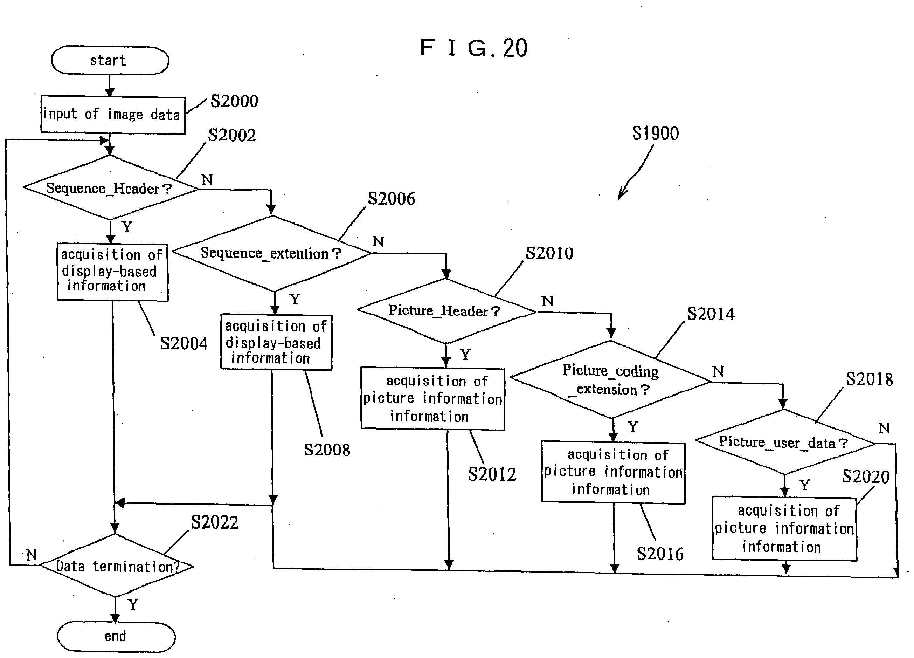

Next, the data analyzing step S1702 is described referring to Figs. 19 and 20. In the data analyzing step S1702, a predetermined analyzing result is outputted from the data separated in the data reading/separating step S1700 through a header information analyzing step S1900 , a data size detecting step S1902 and a time information detecting step S1904.

In the data analyzing step S1702, a Sequence Header and a Picture Header are analyzed (S2002, S2006, S2010, S2014 and S2018) between an input of the image information (VES) separated in the data reading/separating step S1700 (S2000) and data termination (S2022).

As a result of the analyses, "horizontal_size_value, vertical_size_value, aspect_ratio_information, horizontal_size_extention, vertical_size_extention, temporal_reference, Picture_cording_type, Picture_structure, and Picture_user_data" can be obtained (S2004, S2008, S2012, S2016 and S2020).

In the data size detecting step S1902, a picture size is calculated from the image information whose header information is analyzed in the header information analyzing step S1900 subsequent to the separation in the data reading/separating step S1700 . The picture size denotes a data size of the image included in the TS packet of the MPEG2-TS and calculated by means of a counter. The packet header and PES header included in the TS packet are removed in the calculation.

In the time information detecting step S1904, an initial PTS is detected in the separated image information (VES) and the audio information (AES) by the time information detecting section 1616.

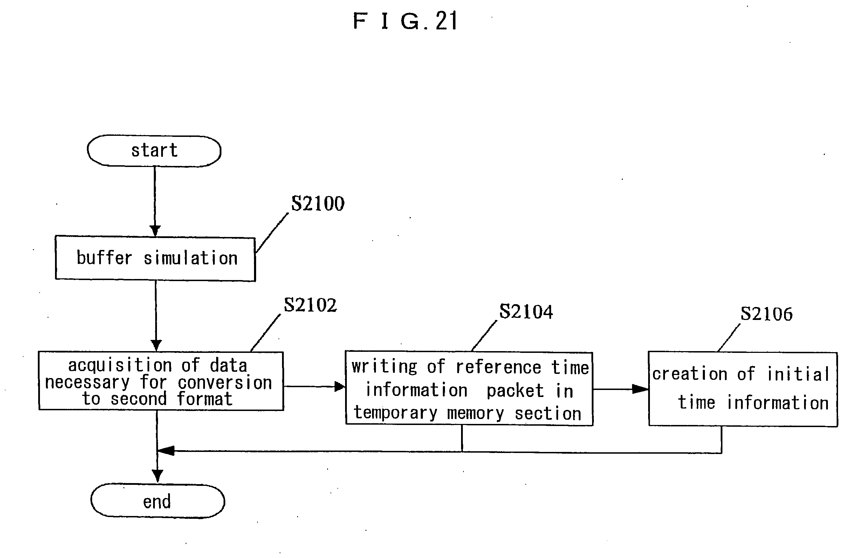

Next, prior to the description of the management information creating step S1704, the format conversion necessary information creating step S1706 is described. Fig. 21 shows the details of the format conversion necessary information creating step S1706. The step S1706 includes a buffer simulation step S2100, a data acquiring step S2102, a writing step S2104 and an initial time information creating step S2106.

The buffer simulation step S2100 is carried out in the data creating section 1620 based on the analyzing result obtained in the data analyzing step S1702 . In the data acquiring step S2102, information required for the conversion to the second format is acquired from the information obtained in the buffer simulation step S2100. In the writing step S2104, the information acquired in the data acquiring step S2102 is written in the temporary memory section 1618. In the initial time information creating step S2106, initial time information is created from the information written in the temporary memory section 1618.

In the buffer simulation step S2100, PCR, ATS, picture size and PTS are read from the data of the MPEG2-TS to be converted in the data reading/separating step S1700, and the buffer simulation is executed to these read information so that the SCR (System Clock Reference), multiplexing order, payload, size/pointer, and Pack_Header (PTS/DTS, P-STD-Buf, sub_header) are created.

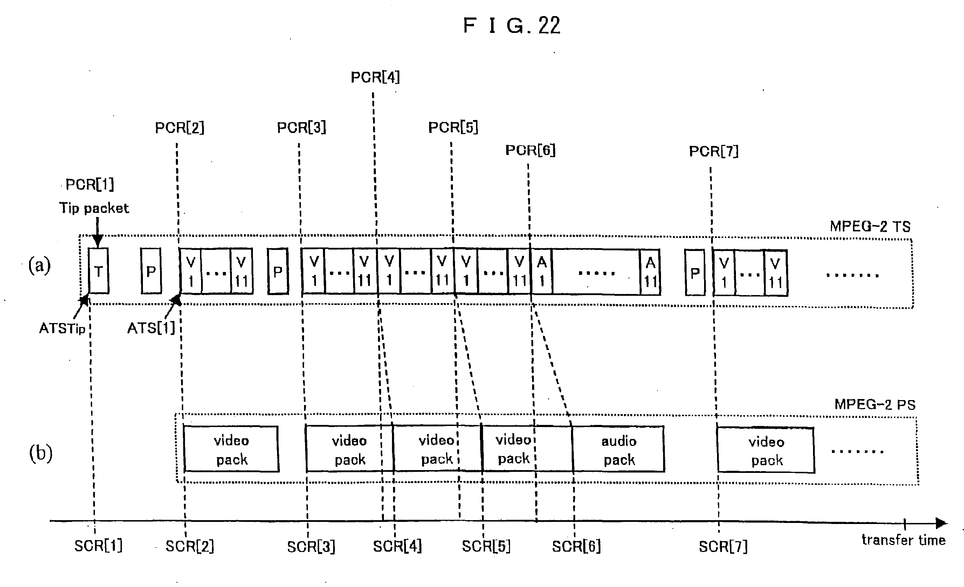

Next, a step of outputting the SCR of the data recorded by means of the MPEG2-PS format in the buffer simulation step, is described referring to Fig. 22. The data of the MPEG2-PS format corresponds to the data recorded by means of the MPEG2-TS format, while the SCR provided for the data of the MPEG2-PS format corresponds to the PCR provided for the data of the MPEG2-TS format.

As described earlier, the ATS is stored in the header appended to each packet of theMPET2-TS . A first ATS in a leading packet of a first unit (including the management information) and a second ATS in a leading packet of a second unit (including the image information) are read by the reading section 1602. The leading packet of the first unit serves as a leading packet of the entire units of the MPEG2-TS.

Next, a differential between the read first ATS and second ATS is calculated, and unnecessary data is appended to the first packet of theMPEG2-TS so as to bridge the differential. Thereby, byte lengths in the first unit of the MPEG2-TS and the first pack of the MPEG2-PS are made to have an identical length . Then , the PCR of the second unit after a bit having a predetermined length is appended thereto is calculated. Further, the calculated PCR of the second unit of the MPEG2-TS is set as the SCR of the second pack of the MPEG2-PS. Thus, the SCR of the MPEG2-PS can be created.

As a result of the foregoing steps , the PCR of the MPEG2-TS format and the SCR of the MPEG2-PS format can be surely synchronized with each other. The SCR of the MPEG2-PS can be thus converted into the PCR of the MPEG2-TS without the re-encoding process.

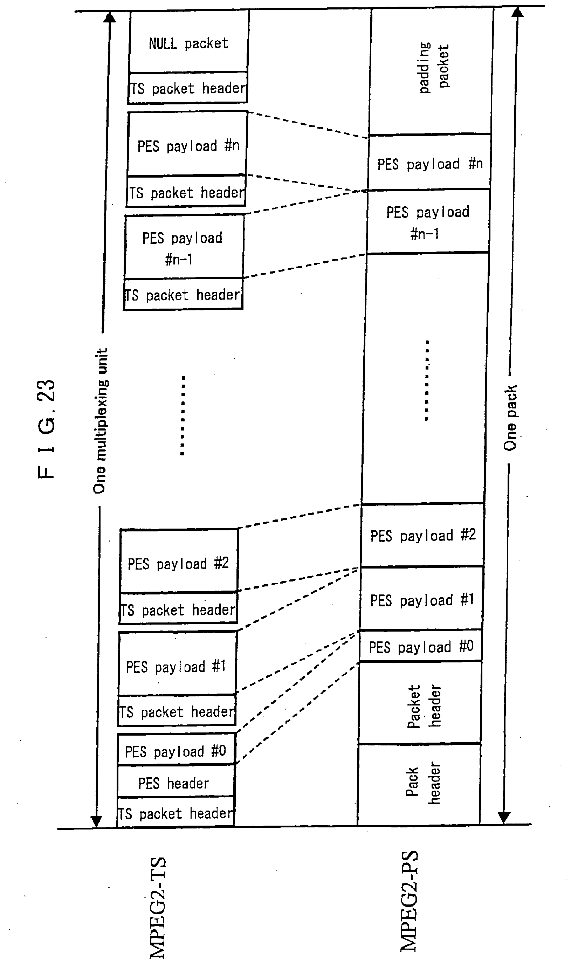

A next step is described. As shown in Fig. 23, each packet of the MPEG2-TS is comprised of a TS packet header, a PES header, a PES payload and the like. Of the components constituting the packet, a picture size of the PES payload portion including the image information and the audio information, except for the packet header and the PES header, is extracted. Further, number of data, which can be stored in the payload portions of the respective packs of the MPEG2-PS, is calculated. The image information and the audio information are allocated to the payload portions of the respective MPEG2-PS packs based on the calculated number of data and stored therein. In such amanner, the respective image information and audio information of the MPEG2-TS can be converted into the respective image information and audio information of the MPEG2-PS without the re-encoding process.

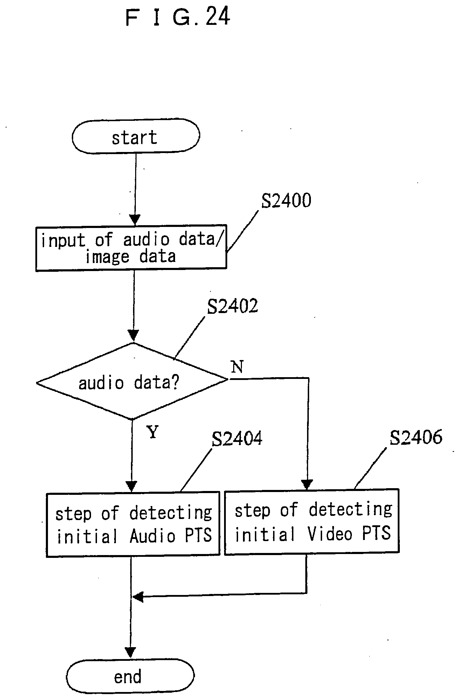

Next, a step of creating the PTS or the DTS of the MPEG2-PS is described referring to Fig. 24. As described earlier, the PTS or the DTS of the MPEG2-PS is stored in the packet header of the PES packet. In the MPEG2-TS, a PES packet includes a plurality of TS packets . Therefore, the PTS or the DTS is stored in each unit comprised of the plurality of TS packets.

A thought is given to the detection of the PTS, for example, in the foregoing constitution. As shown in Fig. 24, the audio data or image data is inputted (S2400), if the inputted data is the audio data or the image data is judged (S2402), an Audio PTS is detected in the case of the audio data (S2404), while a Video PTS is detected in the case of the image data (S2406) .

In the case of the MPEG2-PS, a PES packet, to which the PES header including the PTS or the DTS is appended, constitutes a PS pack. In contrast to that, in the case of the MPEG2-TS, the PES header is appended to the PES packet, and the PES packet is divided. Therefore, the PTS or the DTS is disposed in the PES header of each PS pack in the MPEG2-PS, while the PTS or the DTS is disposed in the PES header appended to one of the plurality of TS packets in the MPEG2-PS. Accordingly, the respective PTSs or the DTSs of the both formats may possibly correspond to each other.

When they correspond to each other, itbecomes unnecessary to convert the PTS or the DTS in the format conversion and the PTS or the DTS before the format conversion can be used after the format conversion as well. This further facilitates the conversion of the PTS or the DTS in the format conversion.

As described, the SCR, multiplexing order, payload size/pointer, packet number and packet structure are determined so that PES_Header (Adaptation_Field) can be created.

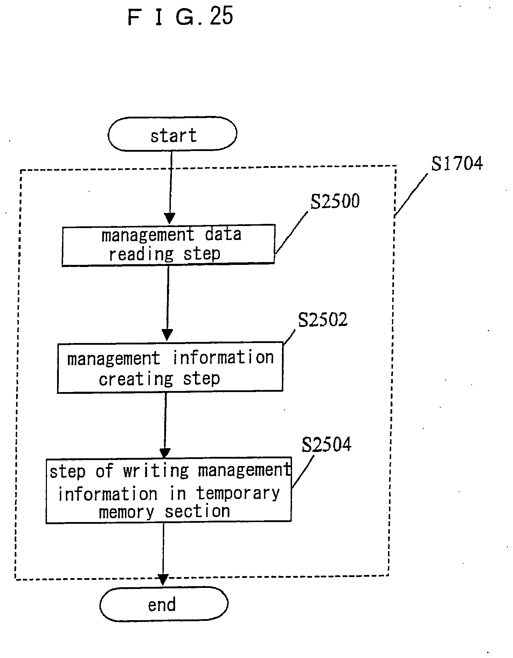

Next, a step of creating the management information is described referring to Fig. 25. AS shown in Fig. 25, the step of creating the management information includes a step S2500 of reading the TIP packet and the PMT packet, which are the management data, from the temporary memory section 1618 by means of the data read/write control section 1622, a step S2502 of creating the RDI pack in the data creating section 1620, a step S2504 of writing the RDI pack in the temporary memory section 1618 by means of the data read/write control section 1622 and a step of acquiring encode_info which is used for controlling VOB (Video Object) in the RDI creation (not shown in Fig. 25) .

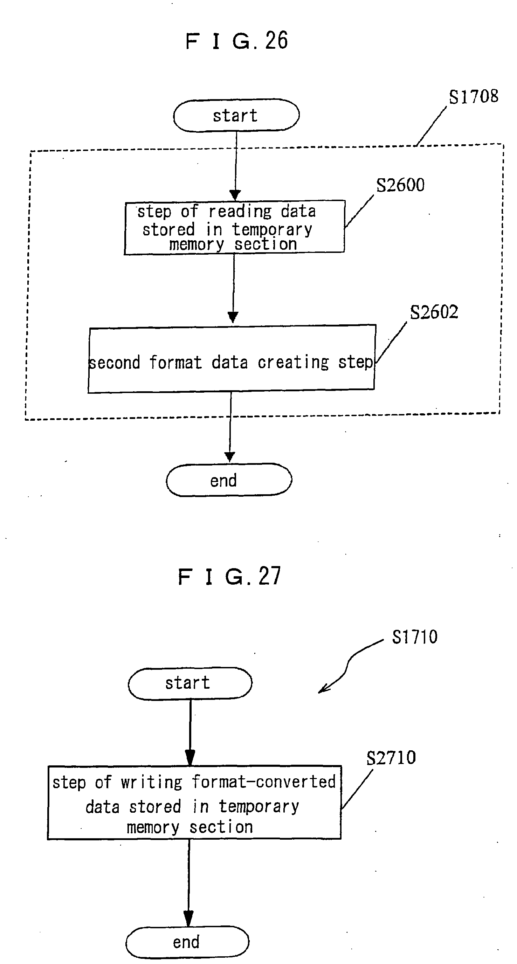

Fig. 26 is a flow chart of the second format data creating step S1708 . The second format data creating step S1708 includes a step S2600 in which the different types of data, which are RDI, AES, VES and padding, written in the temporary memory section 1618 is read by means of the data read/write control section 1622 and a step S2602 in which the pack of the MPEG2-PS format is created in a buffer memory based on the read data and the multiplexing order and payload size/pointer obtained in the format conversion necessary information creating step S1706.

In the second format data creating step S1708, the SCR and PES_Header obtained in the format conversion necessary information creating step S1706 are provided for the data of the MPEG2-PS format when the data of the MPEG2-PS format is created in the temporary memory 1618.

In the data writing step S1710, as shown in Fig. 27, the data of the MPEG2-PS format ultimately created in the temporary memory section 1618 is recorded on the recording medium 1604 through the writing section 1606.

The format conversion process so far described is thereafter carried out in the same manner regarding the 11 TS packets as a unit.

The format conversion can be thereby carried out at a high speed without the re-encoding process in the case of the format conversion from the MPEG2-TS format to the MPEG2-PS format according to the described manner thus far described.

In the foregoing constitution, the different recording media are used for the read and write in order to simplify the description, whereas a recording medium may be shared by the read and write.

### PIPELINE PROCESS

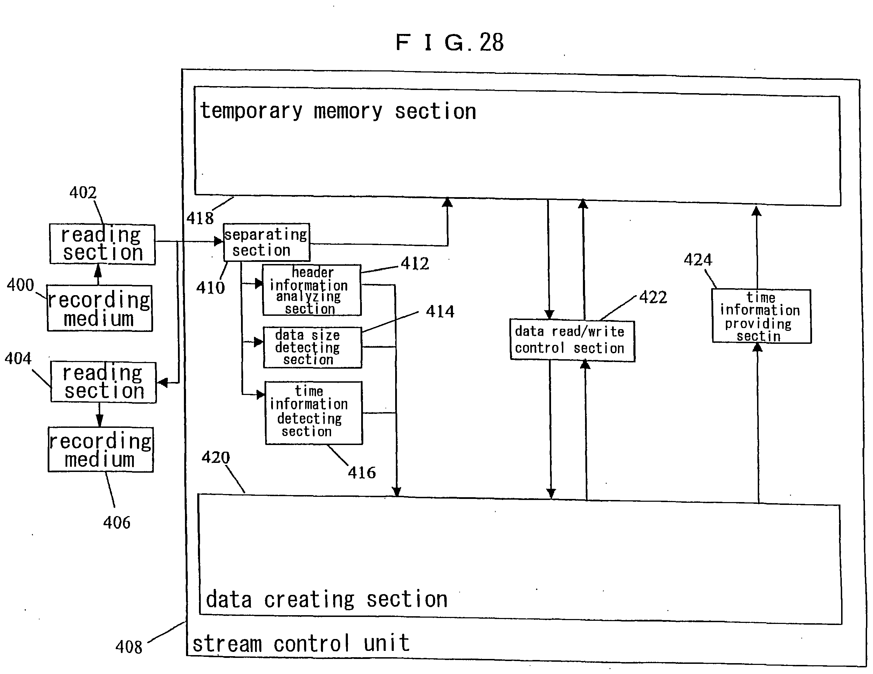

Fig. 28 is a block diagram illustrating a constitution of a format conversion device in which the recording medium 400, reading section 402, another recording medium 406 and writing section 404 are disposed on a same bus. The roles of the respective components are the same as in the earlier description.

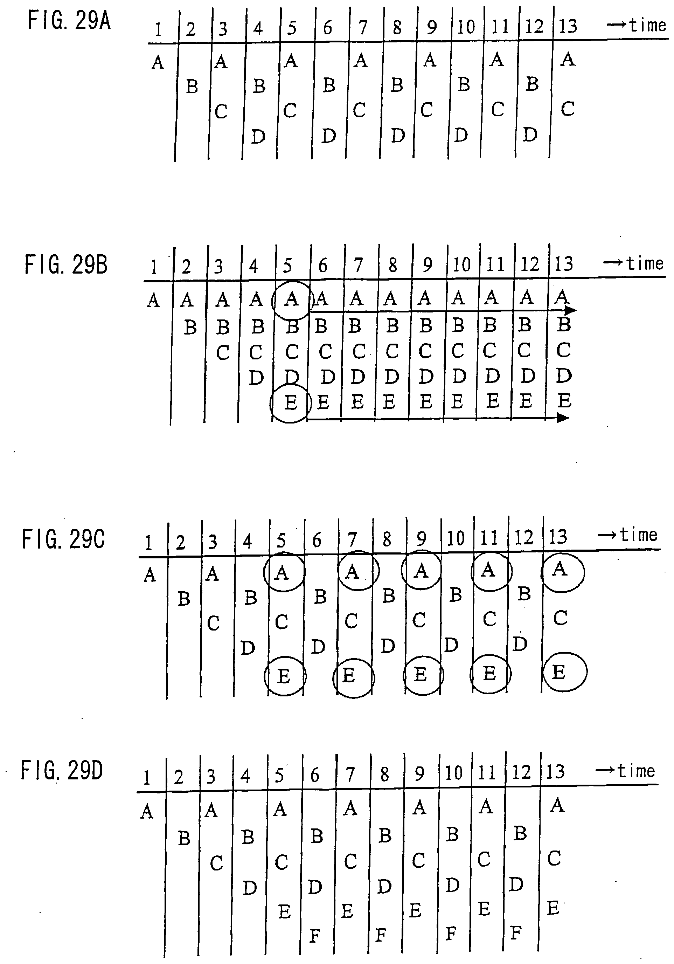

Figs. 29A - 29D are conceptual diagrams of a pipeline process in the format conversion using the format conversion device of Fig. 28. In the process, the step S512 shown in Fig. 5 (including the data reading/separating step S500 and the data analyzing step S502) or the step S1712 shown in Fig. 17 (including the data reading/separating step S1700 and the data analyzing step S1702) is assigned to a first step (corresponding to step (A) of Fig. 29A) of the format conversion.

Next, the step S514 shown in Fig. 5 (including the management information creating step S504 and the format conversion necessary information creating step S506) or the step S1714 shown in Fig. 17 (including the management information creating step S1704 and the format conversion necessary information creating step S1706) is assigned to a second step (corresponding to step (B) of Fig. 29A) of the format conversion.

Further, the step S516 shown in Fig. 5 (including only the second format data creating step S508) or the step S1716 shown in Fig. 17 (including only the second format data creating step S1708) is assigned to a third step (corresponding to step (C) of Fig. 29A)of the format conversion.

Further, the step S518 shown in Fig. 5 (including only the data writing step S510) or the step S1718 shown in Fig. 17 (including only the data writing step S1710) is assigned to a fourth step (corresponding to step (D) of Fig. 29A) of the format conversion.

After the first step and the second step of the format conversion are sequentially executed once, a complex step in which the first and third steps are combined and a complex step in which the second and fourth steps are combined are alternately executed. In the foregoing manner, the processes using the recording medium 400 and the recording medium 406 which respectively require a temporal exclusivity can be efficiently executed. Further, the format conversion itself can be thereby efficiently pipeline-processed.

More specifically, the data reading/separating step and the data analyzing step serve as the first step of the format conversion, the management information creating step and the format conversion necessary information creating step serve as the second step of the format conversion, the second format data creating step serves as the third step of the format conversion, and the data writing step serves as the fourth step of the format conversion. Then, the first step of the format conversion and the second step of the format conversion are sequentially executed, and thereafter the third step of the format conversion and the first step of the format conversion are simultaneously executed, then, followed by the simultaneous execution of the fourth step of the format conversion and the second step of the format conversion. The combinations of the simultaneously executed steps are repeatedly used.

Thereby, in the constitution in which the reading section comprising the recording medium and the writing section comprising the another recording medium are present on the same bus, the reading step with respect to the recording medium and the writing step with respect to the another recording medium can be carried out in an exclusive and pipeline manner.

Hereinafter, the foregoing format conversion method is described in detail referring to Figs. 29A - 29D. As shown in Fig. 29A, the format conversion process is divided into a plurality of steps (corresponding to step (B) and step (C) in Fig. 29A). Then, when the common bus is used for the read and write in order to access the recording medium, the reading step using the common bus (corresponding to step (A) in Fig. 29A) and the writing step using the common bus (corresponding to step (D) shown in Fig. 29A) are executed at the same time as the cycle of any of the step of the format conversion (corresponding to step (B) and step (C) of Fig. 29A), and the reading step (A) and the writing step (D) are executed in different time zones (cycles).

In the foregoing manner, the step of the formation conversion can be executed without simultaneously using the bus, as a result of which the common bus is not competitively used and the process is thereby efficiently executed.

For example, a thought is given to a case in which the format conversion process is divided into a plurality of steps as shown in Fig. 29B and Fig. 29C, and a reading step (A) and a writing step (E) are executed in a step (cycle) among the divided plurality of steps . In such a case, a competition is generated in using the bus because the reading step (A) and the writing step (E) are simultaneously executed.

In contrast to the foregoing case, the following countermeasure is employed in order to prevent the common bus, which is shared by the recording medium in which the pre-format conversion information is stored and the recording medium in which the post-format-conversion information is stored, from being competitively used between a reading step and a writing step.

As shown in Fig. 29D, the format conversion process comprising the steps in which the bus is not used is divided into a plurality of steps (B-E). Then, the reading step (A) and the writing step (F) are executed at the same time as a step different thereto among the plurality of steps (B-E). Thereby, the competition in using the common bus can be prevented. In Fig. 29D, step (F) denotes the writing step.

In the foregoing case, the format conversion process including the steps in which the bus is not used is divided into more steps than the number of the steps shown in Fig. 29A. Accordingly, there are more steps (cycles) in which the reading step (A) and the writing step (F) are disposed, which can accelerate the process.

More specifically, in Fig. 29D, the step (B) in Fig. 29A is divided into the steps (B) and (C) in Fig. 29D, and further, the step (C) in Fig. 29A is divided into the steps (D) and (E) in Fig. 29D. As a result, in Fig. 29D, for example, the reading step (A) can be carried out while the step (B) in Fig. 29A is being carried out. In the same manner, the writing step (F) can also be executed at a high speed in comparison to the case of Fig. 29A.

In the present example, the format conversion process is divided into the four steps, however, the present invention is not limited to the number of the step and may be divided into number of steps other than four. The contents of the respective steps for the format conversion can be optionally changed.

## Claims

1. A format conversion method for converting a stream in a first format and including audio information, image information or management information into a stream in a second format, wherein
the streams in the first and the second formats are respectively comprised of a plurality of unit data, and a first fixed byte length of data units of the first format is longer than a second fixed byte length of data units of the second format,
the plurality of unit data in the first format is converted without having to be re-encoded into the plurality of unit data in the second format, and
the stream in the first format has first reference value (SCR) in the header of each of the plurality of unit data wherein, the first reference value is for setting or correcting a value of reference synchronizing information (STC) serving as a time reference to a value contemplated on an encoder,
wherein the format conversion method includes:
extracting a data length required in a first one of the plurality of unit data among the stream in the first format by comparing first reference values corresponding to a first one of the plurality of unit data and a next one of the plurality of unit data respectively, among the stream in the first format, the first one is a reference value of a pack used for storing the management information and the next one is a reference value of a pack used for storing the image information;
appending unnecessary data to a first unit data including the management information in the second format to make the reference value of a second unit data in the second format correspond to the reference value of the pack used for storing the image information in the first format, wherein the unnecessary data is stuffed so that the data length of the first unit data including the management information in the second format and the calculated data length have a uniform length; and
for a respective unit data of the first format used for storing image information or audio information:
extracting a picture size of the payload portion of the respective unit data including the image information or the audio information;
calculating a number of data dividable relative to a data size of the unit data of the second format;
dividing data including the image information or the audio information in the respective unit data of the first format based on the number of data so as to allocate the divided data to units data of the second format.

2. A format conversion method as claimed in Claim 1, wherein
the unit data constituting a first unit in the stream of the second format each has input time information, and
input time information of the respective unit data constituting the stream of the second format is created for a predetermined byte length which is based on a reference time adjusted based on the reference value of a second unit

3. A format conversion method as claimed in Claim 1, wherein
the stream of the first format has time information for synchronously reproducing image information and audio information included in the stream of the first format, and
the time information for synchronously reproducing the image information and the audio information included in the stream of the first format is used as time information for synchronously reproducing image information and audio information included in the stream of the second format at the time of the conversion from the stream of the first format to the stream of the second format.

4. A format conversion method as claimed in Claim 1, wherein
the stream of the first format has time information for decoding image information and audio information included in the stream of the first format, and
the time information for decoding the image information and the audio information included in the stream of the first format is used as time information for decoding image information and audio information included in the stream of the second format at the time of the conversion from the stream of the first format to the stream of the second format.

5. A format conversion method as claimed in Claim 1, wherein
the respective unit data have at least a header,
data including image information or audio information for each respective unit data is obtained by removing the header from the respective unit data.

## Patentansprüche

1. Formatkonvertierungsverfahren zum Konvertieren eines Stroms in einem erstem Format, der Audioinformationen, Bildinformationen oder Verwaltungsinformationen enthält, in einen Strom in einem zweiten Format,
wobei die Ströme in dem ersten und dem zweiten Format jeweils aus einer Vielzahl von Einheitsdaten bestehen und eine erste feste Bytelänge von Dateneinheiten des ersten Formats länger ist als eine zweite feste Bytelänge von Dateneinheiten des zweiten Formats,
wobei die Vielzahl von Einheitsdaten in dem ersten Format konvertiert wird, ohne erneut in die Vielzahl von Einheitsdaten in dem zweiten Format codiert werden zu müssen, und
der Strom in dem ersten Format einen ersten Referenzwert (SCR) in dem Kopfdatensatz von jedem der Vielzahl von Einheitsdaten aufweist, wobei der erste Referenzwert zum Einstellen oder Korrigieren eines Wertes der Referenzsynchronisationsinformationen (STC) dient, die als Zeitreferenz für einen auf einem Codierer vorgesehenen Wert dienen,
wobei das Formatkonvertierungsverfahren Folgendes umfasst:
Extrahieren einer Datenlänge, die in einer ersten der Vielzahl von Einheitsdaten erforderlich ist, aus dem Strom in dem ersten Format durch Vergleichen von ersten Referenzwerten, die jeweils einem ersten der Vielzahl von Einheitsdaten und einem nächsten der Vielzahl von Einheitsdaten entsprechen, aus dem Strom in dem ersten Format, wobei der erste ein Referenzwert eines Pakets ist, das zum Speichern der Verwaltungsinformationen verwendet wird, und der nächste ein Referenzwert eines Pakets ist, das zum Speichern der Bildinformationen verwendet wird;
Anhängen unnötiger Daten an Daten einer ersten Einheit, einschließlich der Verwaltungsinformationen im zweiten Format, damit der Referenzwert der Daten einer zweiten Einheit im zweiten Format dem Referenzwert des Pakets entspricht, das zum Speichern der Bildinformationen im ersten Format verwendet wird, wobei die unnötigen Daten so gestopft werden, dass die Datenlänge der ersten Einheitsdaten einschließlich der Verwaltungsinformationen im zweiten Format und der berechneten Datenlänge eine einheitliche Länge aufweisen; und
für jeweilige Einheitsdaten des ersten Formats, das zum Speichern von Bildinformationen oder Audioinformationen verwendet wird:
Extrahieren einer Bildgröße des Nutzlastteils der jeweiligen Einheitsdaten einschließlich der Bildinformationen oder der Audioinformationen;
Berechnen einer Anzahl von Daten, die relativ zu einer Datengröße der Einheitsdaten des zweiten Formats teilbar sind;
Teilen von Daten einschließlich der Bildinformationen oder der Audioinformationen in die jeweiligen Einheitsdaten des ersten Formats basierend auf der Anzahl von Daten, um die geteilten Daten den Einheitsdaten des zweiten Formats zuzuordnen.

2. Formatkonvertierungsverfahren nach Anspruch 1, wobei die Einheitsdaten, die eine erste Einheit in dem Strom des zweiten Formats bilden, jeweils Eingabezeitinformationen aufweisen, und Eingabezeitinformationen der jeweiligen Einheitsdaten, die den Strom des zweiten Formats bilden, für eine vorbestimmte Bytelänge erzeugt werden, die auf einer Referenzzeit basiert, die basierend auf dem Referenzwert einer zweiten Einheit angepasst wurde.

3. Formatkonvertierungsverfahren nach Anspruch 1, wobei
der Strom des ersten Formats Zeitinformationen zum synchronen Wiedergeben von Bildinformationen und Audioinformationen aufweist, die in dem Strom des ersten Formats enthalten sind, und
die Zeitinformationen zum synchronen Wiedergeben der Bildinformationen und der Audioinformation, die in dem Strom des ersten Formats enthalten sind, als Zeitinformationen zur synchronen Wiedergabe von Bild- und Audioinformationen verwendet werden, die im Strom des zweiten Formats zum Zeitpunkt der Konvertierung vom Strom des ersten Formats in den Strom des zweiten Formats enthalten sind.

4. Formatkonvertierungsverfahren nach Anspruch 1, wobei der Strom des ersten Formats Zeitinformationen zum Decodieren von Bildinformationen und Audioinformationen aufweist, die in dem Strom des ersten Formats enthalten sind, und
die Zeitinformationen zum Decodieren der Bildinformationen und der Audioinformationen, die in dem Strom des ersten Formats enthalten sind, als Zeitinformationen zum Decodieren von Bildinformationen und Audioinformationen verwendet werden, die zum Zeitpunkt der Konvertierung vom Strom des ersten Formats in den Strom des zweiten Formats im Strom des zweiten Formats enthalten sind.

5. Formatkonvertierungsverfahren nach Anspruch 1, wobei
die jeweiligen Einheitsdaten mindestens einen Kopfdatensatz aufweisen, Daten, die Bildinformationen oder Audioinformationen für die jeweiligen Einheitsdaten enthalten, durch Entfernen des Kopfdatensatzes aus den jeweiligen Einheitsdaten erhalten werden.

## Revendications

1. Un procédé de conversion de format permettant de convertir un flux dans un premier format puis, en incluant des informations sonores, des informations à images ou des informations de gestion, de convertir un flux dans un deuxième format, en fonction des principes suivants :
les flux du premier format et du deuxième format sont, respectivement, composés d'une pluralité de données d'unités et une première longueur fixe en octets d'unités de données du premier format est plus longue qu'une deuxième longueur fixe en octets d'unités de données du deuxième format
la pluralité de données d'unités dans le premier format est convertie sans qu'un nouveau codage ne soit nécessaire dans la pluralité de données d'unités dans le deuxième format et
le flux dans le premier format a la première valeur de référence (SCR) dans l'en-tête de chaque élément de la pluralité de données d'unités et cette première valeur de référence a pour but de programmer ou corriger une valeur de référence pour la synchronisation d'informations (STC) qui servent de référence chronologique à une valeur envisagée dans un codeur,
et ce procédé de conversion de format se compose des éléments suivants :
l'extraction d'une longueur de données nécessaire dans le premier cas de la pluralité de données d'unités figurant dans le flux, dans le premier format, en comparant les premières valeurs de référence correspondant au premier cas de la pluralité de données d'unités et un cas suivant de la pluralité de données d'unités, respectivement, dans le flux du premier format, le premier est une valeur de référence d'un paquet utilisé pour la conservation d'informations de gestion alors que le suivant est une valeur de référence d'un paquet utilisé pour la conservation d'informations à image,
l'adjonction de données inutiles à une première série de données d'unités, y compris les informations de gestion du deuxième format afin que la valeur de référence d'une deuxième série de données d'unités du deuxième format corresponde à la valeur de référence du paquet utilisé pour la conservation d'informations à images du premier format, et les données inutiles font l'objet d'un bourrage afin que la longueur des données du premier format, y compris les informations de gestion du deuxième format et la longueur calculée des données aient une longueur uniforme et
pour une série de données d'unités respective du premier format utilisée pour la conservation d'informations à images ou d'informations sonores :
l'extraction d'une taille d'image pour la partie à charge marchande de la série de données d'unités respective, y compris les informations à images ou les informations sonores ;
le calcul d'un nombre de données divisible par rapport à une taille de données pour les données d'unités du deuxième format ;
la division de données, y compris les informations à images ou les informations sonores dans la série de données d'unités respective du premier format, en fonction du nombre de données, afin d'attribuer les données ainsi divisées aux données d'unités du deuxième format.

2. Un procédé de conversion de format, comme celui que décrit la revendication 1, si ce n'est que :
chaque série de données d'unités constituant une première unité du flux du deuxième format a saisi des informations chronologiques et
des données chronologiques saisies des données d'unités respectives constituant le flux du deuxième format sont créées pour une longueur prédéterminée en octets qui est basée sur un temps de référence ajusté en fonction de la valeur de référence d'une deuxième unité.

3. Un procédé de conversion de format, comme celui que décrit la revendication 1, si ce n'est que :
le flux du premier format a des informations chronologiques pour la reproduction synchronisée des informations à images et des informations sonores incluses dans le flux du premier format et
les informations chronologiques de reproduction synchronisée des informations à images et des informations sonores incluses dans le flux du premier format sont utilisées en tant qu'informations chronologiques pour la reproduction synchronisée des informations à images et des informations sonores incluses dans le flux du deuxième format lors de la conversion du flux du premier format en flux du deuxième format.

4. Un procédé de conversion de format, comme celui que décrit la revendication 1, si ce n'est que :
le flux du premier format a des informations chronologiques pour le décodage d'informations à images et d'informations sonores incluses dans le flux du premier format et
les informations chronologiques de décodage des informations à images et des informations sonores incluses dans le flux du premier format sont utilisées en tant qu'images chronologiques pour le décodage des informations à images et des informations sonores incluses dans le flux du deuxième format lors de la conversion du flux du premier format en flux du deuxième format.

5. Le procédé de conversion de format que décrit la revendication 1, si ce n'est que les données d'unités respectives ont au moins un en-tête, des données, y compris des informations à images ou des informations sonores, pour chaque unité respective, et ces données s'obtiennent en retirant l'en-tête des données d'unités respectives.
